# EUROPÄISCHE PATENTANMELDUNG

(11) **EP 0 949 117 A2**
(43) Veröffentlichungstag der Anmeldung: **13.10.1999**
(21) Anmeldenummer: 99106769.5
(22) Anmeldetag: 06.04.1999
(51) Int. Cl.: B60P 3/04

(54) **Vorrichtung für den Transport von Pferden**

(30) Priorität: 07.04.1998 DE 19815551
(71) Anmelder: Helmut Esselmann GmbH & Co. KG, 59069 Hamm (DE)
(72) Erfinder: Weingarth, Lothar, 66271 Kleinblittersdorf (DE)
(74) Vertreter: Bernhardt, Winfrid, Dr.-Ing.

(57) **Zusammenfassung**

Die Erfindung betrifft eine Vorrichtung für den Transport von Pferden (1). Erfindungsgemäß weist die Transportvorrichtung (1) Einrichtungen zur Errichtung einer Pferdestallanlage auf. Durch diese Erfindungslösung ist es möglich, Pferde am Veranstaltungsort von Sportveranstaltungen unabhängig von den dort zur Verfügung stehenden Unterbringungsmöglichkeiten in einer den Vorschriften entsprechenden Stallanlage unterzubringen.

## Beschreibung

Die Erfindung betrifft eine Vorrichtung für den Transport von Pferden.

Im Rahmen des Pferdesports müssen Renn- und Turnierpferde mitunter über erhebliche Entfernungen an Veranstaltungsorte transportiert werden. Bekanntermaßen werden hierfür Transporteinrichtungen, insbesondere Anhänger, mit Transportboxen für jeweils ein Pferd verwendet. Die Transportboxen sind so eng, daß sie den während des Transports darin stehenden Pferden insbesondere seitlichen Halt bieten. Am Veranstaltungsort können die Pferde nicht in diesen engen Boxen verbleiben, sondern müssen in einer Stallanlage mit vorgeschriebene Mindestabmessungen aufweisenden Stallboxen untergebracht werden. Im allgemeinen stehen an den Veranstaltungsorten zu mietende Stallanlagen zur Verfügung, in denen eine Vielzahl von Pferden unterschiedlicher Veranstaltungsteilnehmer untergebracht wird.

Es ist die Aufgabe der vorliegenden Erfindung, eine neue Vorrichtung für den Transport von Pferden zu schaffen, durch welche die artgerechte Unterbringung von Sportpferden an Veranstaltungsorten erleichtert ist.

Die diese Aufgabe losende Transportvorrichtung nach der Erfindung ist durch mitgeführte Einrichtungen zur Errichtung einer Pferdestallanlage gekennzeichnet.

Gemäß dieser Erfindungslösung brauchen mit einer Transportvorrichtung antransportierte Pferde am Veranstaltungsort nicht zusammen mit Pferden anderer Teilnehmer in einer Großstallanlage untergebracht zu werden, sondern können in vertrauter Umgebung in einer z.B. unter Wandlung der Transportvorrichtung errichteten Stallanlage stehen. Durch Unterbringung in fremder Umgebung gemeinsam mit anderen Pferden bedingte Beeinträchtigungen, die sich auf die bei Sportveranstaltungen erbrachten Leistungen der Pferde auswirken können, entfallen.

Die Transportvorrichtung kann einen Transportwagen mit wenigstens einem abnehm-, auszieh-, auffalt-, ausklapp-, ausroll- oder/und aufblasbaren Stallwand-, Stalldach- oder/und Trägerelement umfassen.

In einer bevorzugten Ausführungsform ist ein Stalldachelement aus einem in einem Transportraumaufbau des Transportwagens gebildeten Stauraum ausziehbar, wobei der Stauraum vorteilhaft in dem Transportraumaufbau oberhalb von einer oder mehreren Pferde transportboxen, vorzugsweise angrenzend an das Dach des Transportraumaufbaus, angeordnet ist. Einerseits läßt sich vorteilhaft im Dachbereich ohne Vergrößerung der Breiten- und Längenabmessungen des Transportraumaufbaus ein solcher Stauraum unterbringen. Andererseits ist ein aus einem solchen hochgelegenen Stauraum ausgezogenes Stalldachelement von vornherein in einer geeigneten Höhe angeordnet, so daß es nach oder während des Ausziehens nur noch durch geeignete Vertikalstützen gehaltert werden muß.

Das Dachelement kann eine Dachhaut aus einem flexiblen Material aufweisen und in dem Stauraum zusammengefaltet oder zusammengelegt sein.

Zweckmäßig wird in dem Stauraum ein solches flexibles Stalldachelement über Querträger beweglich auf sich in Auszugrichtung angrenzend an den Stauraum erstreckenden Schienen gehaltert, wobei das Stalldachelement beim Ausziehen aus dem Stauraum und Ausbreiten dann auf mit diesen Schienen verbindbaren Schienenanschlußelementen bewegbar ist. Die Querträger können z.B. durch Spriegel gebildet sein, die auf den Schienen bzw. Schienenanschlußelementen über Rollen beweglich sind.

In einer weiteren Ausführungsform der Erfindung kann das Stalldachelement mit einem an den Stauraum angrenzenden Wandteil des Transportraumaufbaus verbunden und über diesen Wandteil aus dem Stauraum ausziehbar sein. Vorzugsweise handelt es sich hierbei um einen Wandteil einer Längsseitenwand des Transportraumaufbaus, der sich über dessen gesamte Länge erstreckt. Damit kann vorteilhaft die Gesamtlänge des Transportraumaufbaus der Transportvorrichtung zur Unterbringung eines entsprechend breiten bzw. langen Dachelements genutzt werden.

Das Dachelement kann zur Bildung eines mehrere, vorzugsweise in Auszugrichtung des Dachelements aneinandergereihte Stallboxen abdeckenden Stalldachs vorgesehen sein. Die Zahl der Stallboxen wird sich nach der Zahl der in dem Transportraumaufbau untergebrachten Pferdetransportboxen richten.

Zweckmäßig weist der Transportraumaufbau Halterungen oder/und Stauraum für Stallwand-, Schienenanschluß- und/oder Trägerelemente auf.

Ein Stauraum kann z.B. durch Rückversetzung einer Seitenwand des Transportraumaufbaus gebildet sein, wobei z.B. in einem solchen sich an einer Längsseite des Transportraumaufbaus erstreckenden Stauraum Stallwandelemente untergebracht werden können. Zweckmäßig lassen sich ferner auch Halterungen für auf einer Zugstange oder einem Zugstangenrahmen der Transportvorrichtung abgetragene Stallwandelemente anbringen, so daß Stallwandelemente auch unter außenseitiger Befestigung am Transportraumaufbau mitgeführt werden können.

In einer bevorzugten Baukonstruktion sind die Stallwandelemente zur Errichtung von Stallboxenwänden mit die Dachträgerschienen abstützenden Vertikalträgern verbindbar, wodurch eine ausreichende Festigkeit der Stallanlage gegen einwirkende Querkräfte gewährleistet ist.

Das Stalldach kann auf der Stallboxvorderseite überstehen, wodurch z.B. ein an mehreren Stallboxen vorbeiführender, überdachter Gang gebildet wird. Durch den Überstand können die Stallboxen an ihrer Vorderseite oberhalb einer Gatterwand offen sein, wobei der Dachüberstand den Pferden sowie mit diesen befaßten Personen einen Wetterschutz bietet.

Die Erfindung soll nun anhand eines Ausführungsbeispiels und der beiliegenden, sich auf dieses Ausführungsbeispiel beziehenden Zeichnungen näher erläutert und beschrieben werden. Es zeigen:
- Fig. 1: eine unter Errichtung einer Stallanlage gewandelte erfindungsgemäße Transportvorrichtung in einer Rückansicht,
- Fig. 2: die Transportvorrichtung von Fig. 1 in einer Vorderansicht,
- Fig. 3: die Transportvorrichtung von Fig. 1 und 2 in einer Seitenansicht,
- Fig. 4: die Transportvorrichtung von Fig. 1 bis 3 in einer zu der Seitenansicht von Fig. 3 entgegengesetzten Seitenansicht,
- Fig. 5: die Transportvorrichtung von Fig. 1 bis 4 in einer Draufsicht, und
- Fig. 6: eine Detailansicht der in den vorangehenden Figuren dargestellten Transportvorrichtung.

In den Figuren ist mit dem Bezugszeichen 1 ein Transportanhänger mit einem ein Spitzdach aufweisenden Transportraumaufbau 2, einem Fahrwerk 3 und einem Zugstangenrahmen 4 bezeichnet. In der dem Zugstangenrahmen 4 gegenüberliegenden Rückwand des Transportraumaufbaus 1 ist eine als Rampe ausschwenkbare Öffnungsklappe 5 vorgesehen.

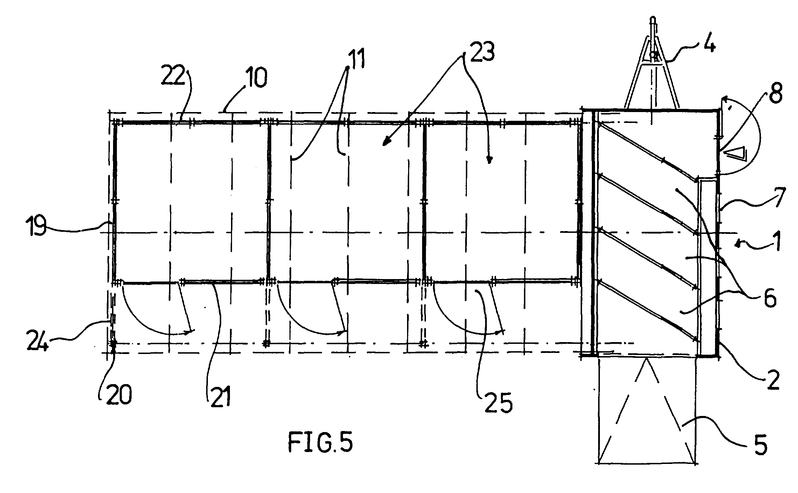

Wie aus der Draufsicht von Fig. 5 hervorgeht, sind in dem Transportraumaufbau 2 drei Transportboxen 6 für jeweils ein Pferd vorgesehen. In dem gezeigten Ausführungsbeispiel sind die Transportboxen schräg zur Fahrtrichtung derart angeordnet, daß sich für jede Box eine für einen Pferdestandplatz ausreichende Länge ergibt. Jeder Transportbox 6 ist eines von drei in einer Längsseitenwand des Transportraumaufbaus 2 vorgesehenen Fenstern 7 zugeordnet. In der die Fenster 7 aufweisenden Längsseitenwand ist ferner eine Tür 8 eingebaut.

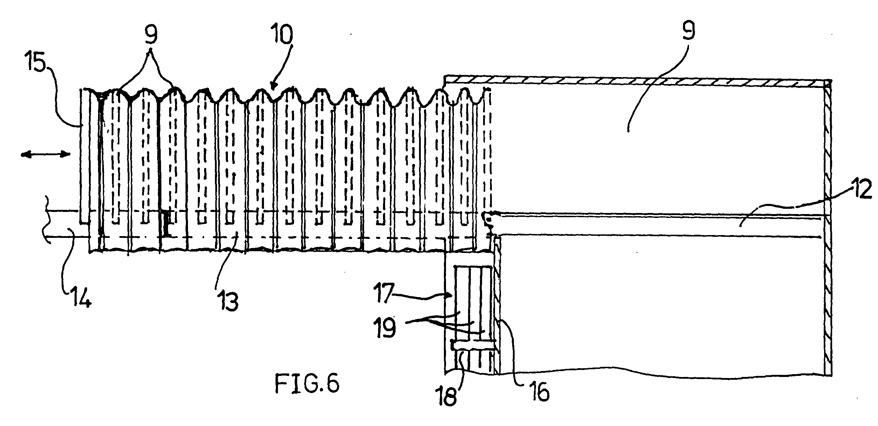

Mit dem Bezugszeichen 9 ist ein angrenzend an das Spitzdach des Transportraumaufbaus 2 angeordneter Stauraum bezeichnet, der zur Unterbringung eines zusammenfaltbaren, eine flexible Dachhaut aufweisenden Dachelements 10 vorgesehen ist. Die flexible Dachhaut, z.B. ein imprägniertes Textilmaterial, wie es für Zeltdächer verwendet wird, ist auf Querträger bildenden Spriegeln 11 gehaltert. So lange das Dachelement 10 in dem Stauraum 9 untergebracht ist, sitzen die Spriegel 11 mit ihren beiden Enden über nicht gezeigte Rollenfahrwerke auf Schienen 12 auf. Die Schienen 12 sind ortsfest in dem Transportraumaufbau 2 unterge-bracht. Mit den Bezugszeichen 13 und 14 sind in Fig. 6 mit den Schienen 12 verbindbare Schienenanschlußelemente bezeichnet, durch die zusammen mit gegebenenfalls weiteren Schienenanschlußelementen, beim Auseinanderziehen des Dachelements 10 verwendbare, Laufschienen gebildet werden können. An ihrem dem Transportraumaufbau 2 abgewandten Ende ist die flexible Dachhaut mit einem Längswandteil 15 verbunden, welches den Stauraum 9 nach außen abschließt, wenn das Dachelement 10 in dem Stauraum 9 untergebracht ist.

Abweichend von der ortsfesten Anbringung der Schienen 12 in dem Transportraumaufbau 2 könnten die Schienen 12 selbst teleskopartig auf ortsfesten Schienen geführt und aus dem Transportraumaufbau 2 ausziehbar sein.

Wie ferner aus der Fig. 6 hervorgeht, ist an der den Wandteil 15 aufweisenden Längsseitenwand durch Rückversetzung eines Längsseitenwandteils 16 ein Stauraum 17 gebildet, der zur Aufnahme von über Halterungen 18 zu befestigende Stallwandelemente 19 vorgesehen ist.

In dem gezeigten Ausführungsbeispiel ist auch der mit der flexiblen Dachhaut des Dachelements verbundene Längswandteil 15 unter Bildung weiteren Stauraums zurückversetzt, so daß er zu dem Wandte 16 bündig ist.

Mit dem Bezugszeichen 20 sind in den Figuren Vertikalstützen bezeichnet, die an ihrem oberen Ende mit der durch die Schienenanschlußelemente 13 und 14 gebildeten Laufschiene verbunden sind und im wesentlichen zur Abstützung des ausgezogenen Dachelements 10 dienen. In dem gezeigten Ausführungsbeispiel sind insgesamt sechs solcher Vertikalstützen 20 verwendet. Die Vertikalstützen 20 sind unter Bildung einer stabilen Stallanlagenkonstruktion mit ihrerseits untereinander verbundenen Stallwandelementen 19, 21 und 22 verschraubt, wobei durch diese Stallwandelemente insgesamt drei Stallboxen 23 entsprechend den drei Transportboxen 6 gebildet sind. Die drei Stallwandelemente 19 dienen zur Bildung von Stallboxseitenwänden, während durch die Stallwandelemente 21 Vorderseiten und die Stallwandelemente 22 Rückseiten der Stallboxen 23 gebildet sind. Die zur Unterbringung in dem Stauraum 17 vorgesehenen Stallwandelemente 19 weisen eine Seitenverlängerung 24 zur jeweiligen Verbindung mit einem der Vertikalträger 20 auf.

An ihrer Rückseite ist die Stallanlage oberhalb der Stallwandelemente 22 durch eine sich bis zum Stalldachelement 10 und durchgehend über alle drei Boxen erstreckende Plane abgeschlossen. An der Vorderseite ist der Bereich oberhalb der Stallwandelemente 21 offen; dafür steht das durch das Dachelement 10 gebildete Stalldach über die Vorderseiten der Stallboxen 23 hinaus schützend vor.

Wie Fig. 5 zu entnehmen ist, weisen die zur Bildung der Stallboxvorderseite dienenden Stallwandelemente 21 jeweils eine Tür 25 auf.

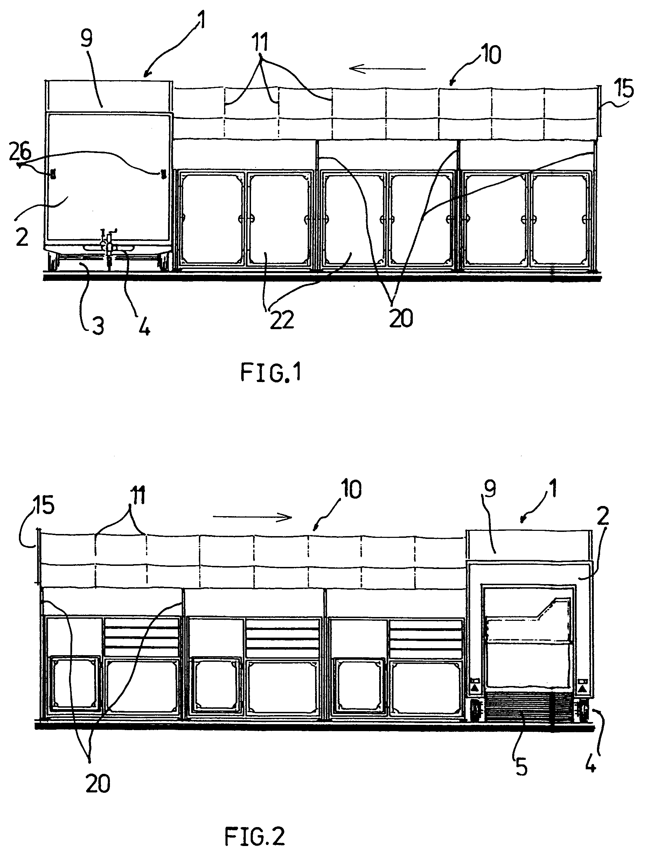

Mit 26 sind in Fig. 1 Einrichtungen für die Halterung der insgesamt sechs Stallwandelemente 21 und 22 vorgesehen, wobei diese Stallwandelemente auf dem Zugstangenrahmen 4 aufsitzen und durch den Zugstangenrahmen 4 abgetragen werden.

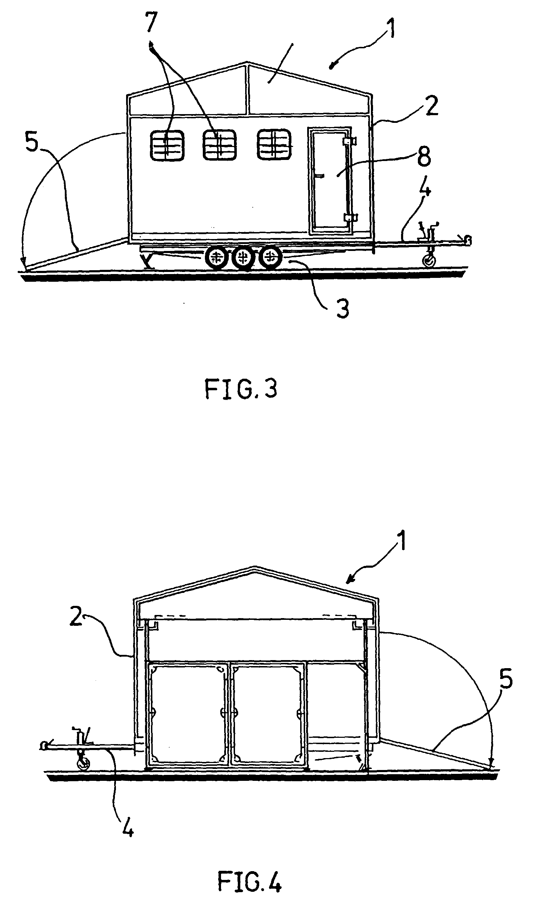

Zur Errichtung der anhand der Fig. 1 bis 6 beschriebenen Stallanlage wird über den Wandteil 15 das Dachelement 10 aus dem Transportraumaufbau 1 herausgezogen, nachdem an die Schienen 12 Schienenanschlußelemente 13 und 14 angesetzt und über die Vertikalträger 20 abgestützt worden sind. Auf den durch die Schienenanschlußelemente gebildeten Laufschienen kann das zusammengefaltete Dachelement 10 ausgebreitet werden, so daß seine flexible, durch die Spriegel 11 abgestützte Dachhaut weitgehend glatt ist. Unter dem so gebildeten Dach können nun die Stallboxen 23 unter gegenseitiger Verbindung der Stallwandelemente 19, 21 und 22 und unter Verbindung dieser mit den Vertikalstreben 20 errichtet werden.

In den Transportboxen 6 antransportierte Pferde können den Transportraumaufbau 2 über die durch die Öffnungsklappe 5 gebildete Rampe verlassen und in die geräumigeren Stallboxen 23 geführt werden. Die Transportboxen lassen sich durch horizontales Verschwenken ihrer der Öffnungsklappe 5 zugewandten Seitenwände öffnen.

Wie insbesondere der Fig. 5 entnommen werden kann, ist die nach Wandlung der Transportvorrichtung in die Stallanlage benötigte Grundfläche nur etwa viermal so groß wie die Grundfläche der Transportvorrichtung im Transportbetrieb, wobei jede der Stallboxen die zur Pferdehaltung unter den gegebenen Bedingungen vorgeschriebenen Maße aufweist.

Im Unterschied zu dem gezeigten Ausführungsbeispiel könnten die Schienen 12 auch auf ortsfesten Innenschienen verschiebbar und zuammen mit dem Dachelement aus dem Transportraumaufbau 2 ausziehbar sein. In diesem Fall würde sich die erforderliche Länge oder Anzahl mitzuführender Schienenanschlußelemente verringern.

## Patentansprüche

1. Vorrichtung für den Transport von Pferden,
gekennzeichnet durch mitgeführte Einrichtungen zur Errichtung einer Pferdestallanlage.

2. Vorrichtung nach Anspruch 1,
dadurch gekennzeichnet,
daß die Transportvorrichtung zur Errichtung der Pferdestallanlage wandelbar ist.

3. Vorrichtung nach Anspruch 2,
dadurch gekennzeichnet,
daß ein Transportwagen (1) mit wenigstens einem abnehm-, auszieh-, auffalt-, ausklapp-, ausroll- oder/und aufblasbaren Stallwand-, Stalldach- oder/und Trägerelement vorgesehen ist.

4. Vorrichtung nach Anspruch 3,
dadurch gekennzeichnet,
daß ein Stalldachelement (10) aus einem in einem Transportraumaufbau (2) des Transportwagens (1) gebildeten Stauraum (9) ausziehbar ist.

5. Vorrichtung nach Anspruch 4,
dadurch gekennzeichnet,
daß der Stauraum (9) in dem Transportraumaufbau (2) oberhalb von einer oder mehreren Pferdetransportboxen (6), vorzugsweise angrenzend an das Dach des Transportraumaufbaus (2), angeordnet ist.

6. Vorrichtung nach Anspruch 4 oder 5,
dadurch gekennzeichnet,
daß das Stalldachelement (10) ein flexibles Dachhautmaterial aufweist und in dem Stauraum (9) zusammengefaltet oder zusammengelegt ist.

7. Vorrichtung nach einem der Ansprüche 4 bis 6,
dadurch gekennzeichnet,
daß das Stalldachelement (10) in dem Stauraum (9) über Querträger (11) beweglich auf sich in Auszugrichtung angrenzend an den Stauraum erstreckenden Schienen (12) gehaltert ist, insbesondere zur Auffaltung auf den Schienen (12) sowie mit den Schienen verbindbaren Schienenanschlußelementen (13,14) bewegbar ist.

8. Vorrichtung nach Anspruch 7,
dadurch gekennzeichnet,
daß die Schienen (12) zusammen mit dem Dachelement (10) aus dem Transport-raumaufbau (2) ausziehbar sind.

9. Vorrichtung nach einem der Ansprüche 4 bis 8.
dadurch gekennzeichnet,
daß das Stalldachelement (10) mit einem an den Stauraum (9) angrenzenden Wandteil (15) des Transportraumaufbaus (2) verbunden und über den Wandteil (15) aus dem Stauraum (9) ausziehbar ist.

10. Vorrichtung nach einem der Ansprüche 4 bis 9,
dadurch gekennzeichnet.
daß das Stalldachelement (9) zur Bildung eines mehrere, vorzugsweise in Auszugrichtung aneinandergereihte Stallboxen (23) abdeckenden Stalldachs vorgesehen ist.

11. Vorrichtung nach einem der Ansprüche 4 bis 10,
dadurch gekennzeichnet,
daß der Transportraumaufbau (2) Halterungen (18,26) oder/und Stauraum (17) für Stallwand-, Schienenanschluß- oder/und Trägerelemente aufweist.

12. Vorrichtung nach einem der Ansprüche 4 bis 11,
dadurch gekennzeichnet,
daß ein Stauraum (17) durch Rückversetzung einer Seitenwand (16) des Transportraumaufbaus (2) gebildet ist.

13. Vorrichtung nach einem der Ansprüche 4 bis 12,
dadurch gekennzeichnet,
daß Halterungen (26) für auf einer Zugstange oder einem Zugstangenrahmen (4) des Transportwagens (1) abgetragene Stallwandelemente (21,22) vorgesehen sind.

14. Vorrichtung nach einem der Ansprüche 4 bis 13.
dadurch gekennzeichnet,
daß die Stallwandelemente (19,21,22) zur Errichtung von Stallboxen (23) mit die Schienen (12) oder Schienenanschlußelemente (13,14) abstützenden Vertikalträgern (20) verbindbar sind.

15. Vorrichtung nach einem der Ansprüche 4 bis 14,
dadurch gekennzeichnet.
daß das Stalldachelernent (10) auf der Stallboxvorderseite über die Stallbox (23) übersteht.
